# EUROPEAN PATENT APPLICATION

(11) **EP 4 659 947 A2**
(43) Date of publication of application: **10.12.2025**
(21) Application number: 25210829.5
(22) Date of filing: 02.02.2021
(51) Int. Cl.: B29K 105/00

(54) **DEVICE FOR THE COOLING AND EXTRACTION OF PREFORMS FOR THE MANUFACTURE OF PLASTIC CONTAINERS**

(30) Priority: 12.02.2020 IT 202000002722
(62) Divisional of application: 21702501.4
(71) Applicant: Sacmi Imola S.C., 40026 Imola (IT)
(72) Inventor: SASSATELLI, Gastone, 40027 Mordano (IT); PENAZZI, Davide, 40026 Imola (IT)
(74) Representative: Modiano, Micaela Nadia

(57) **Abstract**

A device (1) for the cooling and extraction of preforms (10) for the manufacture of plastic containers, comprising at least one grip assembly (2) which forms a plurality of receptacles for respective preforms (10) and means for transferring the preforms that are still warm from an injection molding device to the grip assembly (2), and a cooling and extraction assembly (20) which comprises a cooling plate (21) which is arranged so as to face the grip assembly (2) and can move on command between a position that is closer to the grip assembly (2) and a position that is spaced from the grip assembly (2), the cooling plate (21) supporting a plurality of cooling channels (22) which are designed, with the cooling plate (21) in the closer position, to lead into a respective preform (10) accommodated in a respective receptacle in order to convey a jet of air inside the preform (10) so as to increase its cooling rate, the cooling and extraction assembly (20) comprising an unloading plate (23) which is arranged on the opposite side of the grip assembly (2) with respect to the cooling plate (21), and supporting a plurality of grip bodies (24) which can be moved on command in order to pass through the cooling plate (21) so as to engage selectively, with the cooling plate (21) in the closer position, with a respective preform (10) in order to allow its extraction from the respective receptacle (3).

## Description

The present invention relates to a device for the cooling and extraction of preforms for the manufacture of plastic containers.

Devices are known for unloading and storing preforms for the manufacture of plastic containers, which are normally constituted by a cooling plate which forms a plurality of receptacles arranged like a matrix and designed to accommodate respective preforms that are still warm for the time necessary to cool them at least partially.

Typically, such preforms are fed directly from the injection molding press to the cooling plate and remain in the respective receptacle for a preset time.

Specifically, once the injection process, i.e. the step in which the male and female mold parts remain in a closed position, has ended, the mold opens and the cooling plate is moved towards the preforms partially accommodated in one of the two mold parts so that the receptacles of the cooling plate can engage with respective portions of preforms emerging from the mold part and extracted therefrom so as to allow the closure of the mold and a new molding cycle.

The unloading of the preforms from the cooling plate occurs as a consequence of an expulsion action that can be obtained with pneumatic means, mechanical means, or a combination thereof.

After the expulsion from the cooling plate by the pusher elements, the preforms, by now at least partially cooled, fall by gravity onto a conveyor belt, which then makes them fall, again by gravity, into a container.

The solution described above, while being widely used, is not however free from drawbacks.

First of all, the preforms, although they have undergone a certain cooling, still have some of their portions, typically the bottom one, that are not perfectly rigid and therefore falls can cause localized deformations.

Furthermore, the cooling times are in many cases quite long and this does not allow to optimize the productivity of the apparatus as a whole.

A solution is known from EP0947304 in the name of Husky which allows to speed up the cooling process by using a jet of air to lower the temperature of the internal surface of the preforms.

In particular, said patent document describes a preform molding and cooling apparatus that provides for the removal of the preforms from the preform mold when they are not completely cooled and the subsequent cooling of the preforms outside the molding area; the described solution teaches to perform the cooling of the preforms by injecting a jet of air inside the preforms, cooling the outside of the preform in a classical way, i.e., by cooling the receptacle by means of a coolant fluid, or by convection.

Other similar solutions provide for cooling the inside of the preforms by using jets of air.

However, known solutions have a certain complexity from a constructive standpoint, since they have to manage on the same cooling plate both the operations for introducing air to be directed inside the preforms and the removal of the preforms from the grip hand in order to subsequently unload them.

In some cases, plates have been proposed in which the same elements might selectively provide the jet of air, in order to cool the preforms, or the vacuum to extract them from the grip hand.

As an alternative, solutions have been devised in which the cooling plate supports a plurality of blow molding elements and a plurality of grip elements.

The aim of the present invention is to eliminate, or at least reduce drastically, the drawbacks mentioned above.

Within this aim, an object of the invention is to provide a device for the cooling and extraction of preforms for the manufacture of plastic containers that allows to cool and extract, in an extremely practical and effective manner, the preforms from the grip assembly.

Another object of the invention is to provide a device for the cooling and extraction of preforms for the manufacture of plastic containers that allows to manage in an optimum manner both the cooling operations and the unloading operations, simplifying the movements of the various components so as to optimize both operations.

This aim and these and other objects which will become better apparent hereinafter are achieved by a device for the cooling and extraction of preforms for the manufacture of plastic containers according to the provisions of claim 1.

Further characteristics and advantages of the invention will become better apparent from the description of some preferred but not exclusive embodiments of a device for the cooling and extraction of preforms for the manufacture of plastic containers according to the invention, illustrated by way of non-limiting example in the accompanying drawings, wherein:
Figure 1 is a top plan view of a portion of an apparatus for the manufacture of preforms;
Figure 2 is a top view of an embodiment of a portion of the device for the cooling and extraction of preforms according to the invention;
Figure 3 is a perspective view of the cooling and extraction assembly; not all the preforms have been shown in this view in order to allow a partial view of the surface of the cooling plate;
Figure 3a is a view, similar to Figure 3, of a constructive variation;
Figures 4 and 5 are sectional views of the cooling and extraction assembly when the unloading plate is in a position closer to the cooling plate;
Figure 6 is a sectional view, similar to the one of Figure 4 and 5 but with the unloading plate in a position that is spaced from the cooling plate;
Figure 7 is a view, similar to Figure 3, of a constructive variation of the cooling and extraction assembly in which, for the sake of greater clarity, the unloading plate has not been shown;
Figure 8 is a view, similar to the preceding one, of the constructive variation of Figure 7, in which the cooling channels and the grip bodies are shown;
Figure 9 is a rear view of the cooling and extraction assembly of Figure 7, in which the unloading plate has not been shown for the sake of greater clarity.

With reference to the figures, the present invention relates to a device, generally designated by the reference numeral 1, for the cooling and extraction of preforms 10 for the manufacture of plastic containers.

The device 1 comprises at least one grip assembly 2 which forms a plurality of receptacles for respective preforms 10 and means for transferring the still warm preforms from a molding device, for example an injection molding device, to the grip assembly 2.

The device 1 has a cooling and extraction assembly 20.

The cooling and extraction assembly 20 is designed to cool the preforms 10 arranged at the grip assembly 2 and to extract the cooled preforms 10 from the grip assembly 2.

The cooling and extraction assembly 20 comprises a cooling plate 21 which is arranged, at least in one operating condition thereof, so as to face the grip assembly 2.

The cooling plate 21 can, in particular, move on command with respect to the grip assembly 2 between a position that is closer to the grip assembly 2 and a position that is spaced from the grip assembly 2.

In this regard, the cooling plate 21 can be movable, by virtue of motor means, with respect to a supporting structure that is fixed or connected kinematically to a movable element in order to move into the operating condition in which it is closer to the grip assembly 2.

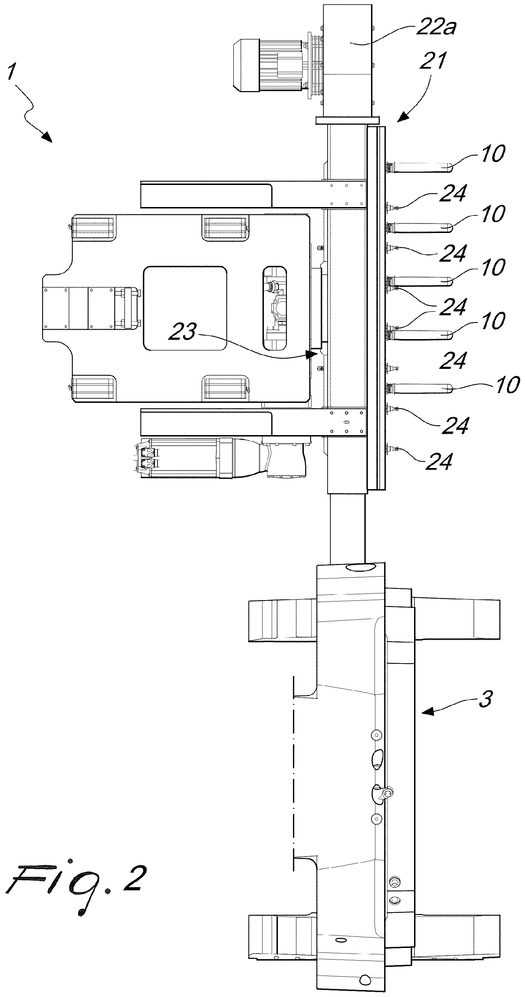

With reference to Figure 2, according to one possible embodiment, the cooling plate 21 can be connected to the movable plane 3 of the press of the molding device.

In this manner, the approach/spacing movement of the cooling plate 21 does not require dedicated motor means but is determined by the opening and closing movement of the press itself.

The cooling plate 21 supports a plurality of cooling channels 22.

The cooling channels 22 are functionally connected to a device for the production of an air flow, constituted for example by a blower 22a or by a compressor.

In one embodiment, the device for producing an air flow can be integral with the cooling plate 21.

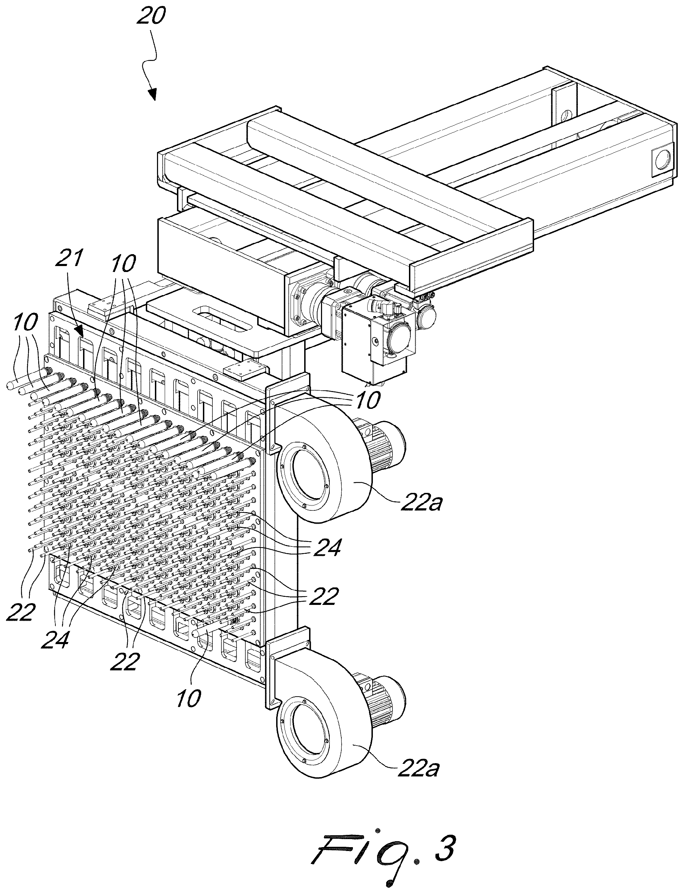

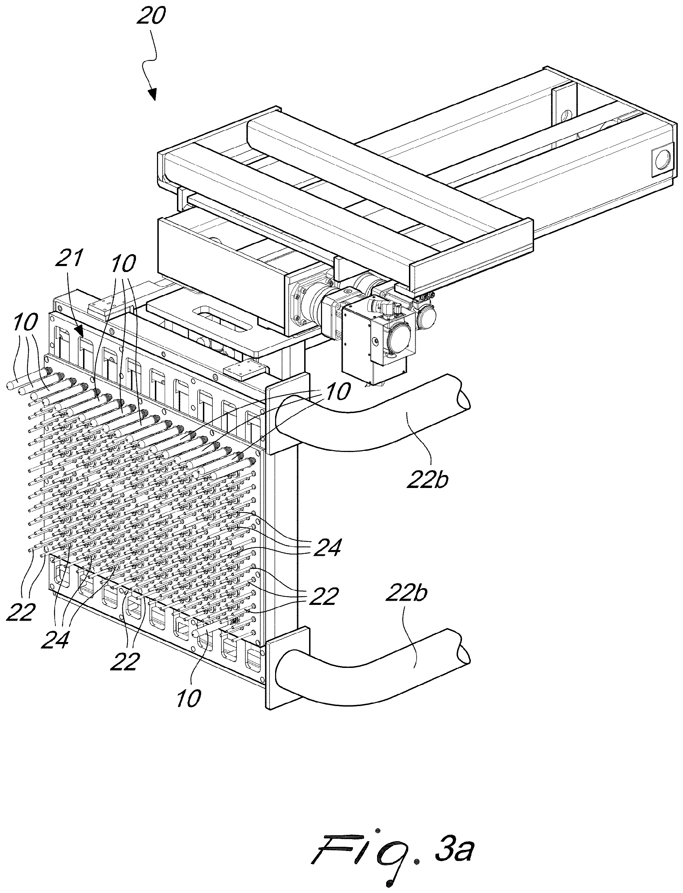

In another embodiment, shown in Figure 3a, the device for producing an air flow is connected to fixed elements of the line and is fluidically connected to the cooling plate 21 for example by means of flexible tubular elements 22b.

The device for producing an air flow may also be associated with cooling means which comprise, for example, a heat exchanger and are adapted to thermally condition the air flow.

In this configuration, the device for producing the flow and the cooling means are preferably connected to fixed elements of the line.

The cooling channels 22 are designed, with the cooling plate 21 in the closer position, to lead into a respective preform 10 accommodated in a respective receptacle 3 in order to convey a jet of air inside the preform 10, so as to increase its cooling rate.

Furthermore, the cooling and extraction assembly 20 comprises an unloading plate 23, which is arranged on the opposite side of the grip assembly 2 with respect to the cooling plate 21.

The unloading plate 23 supports a plurality of grip bodies 24, which can be moved on command in order to pass through the cooling plate so as to engage selectively, when the cooling plate 21 is in the closer position, with a respective preform 10 in order to allow its extraction from the respective receptacle 3.

Advantageously, the grip assembly 2 comprises a grip plate 4 which supports a plurality of receptacles 3 for a respective preform 10.

The grip plate 4 is movable with respect to the molding device in order to pick up the preforms.

The grip plate 4 can furthermore move on command along at least one positioning direction that is substantially perpendicular to the axis of the preforms 10 so as to arrange the preforms 10 extracted in each instance at the cooling channels 22 or at the grip bodies 24.

The receptacles 3 are arranged like a matrix on a plane of arrangement.

Conveniently, the cooling plate 21 is provided with crossing openings 26 for the grip bodies 24 during the step of engagement with the respective preforms 10 and in the step of extraction of the preforms 10.

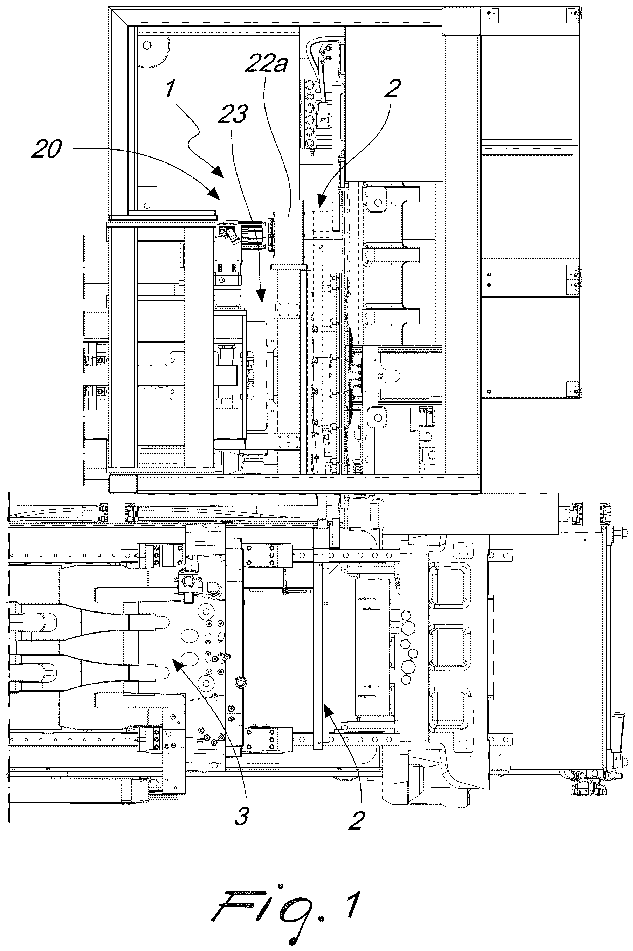

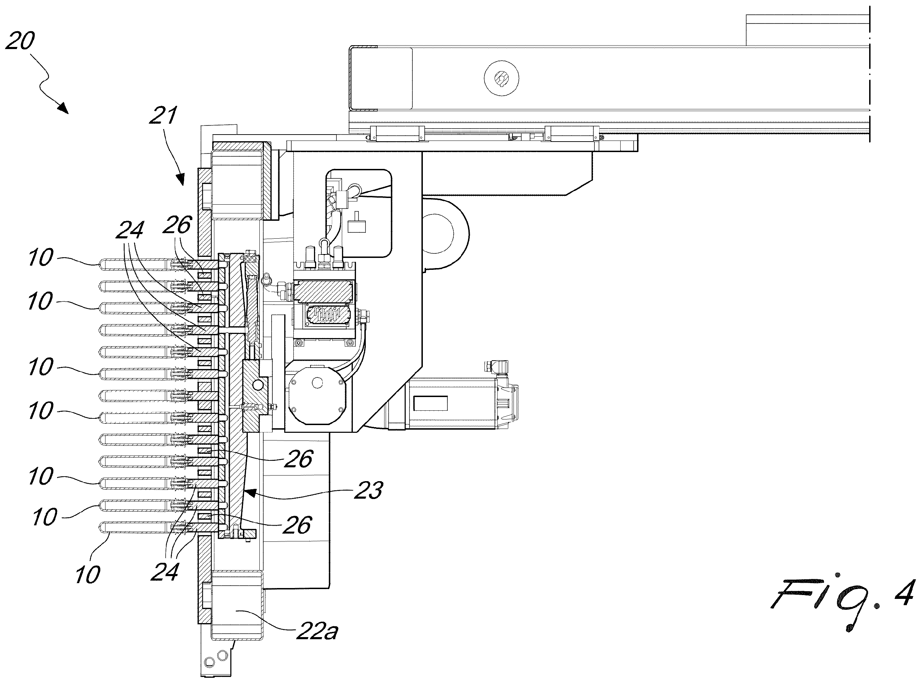

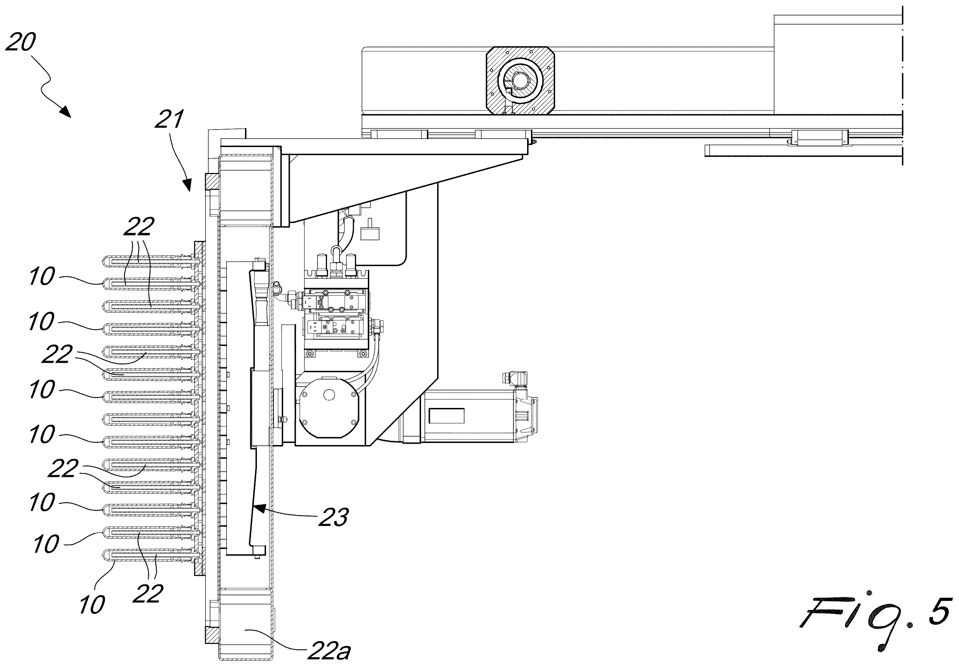

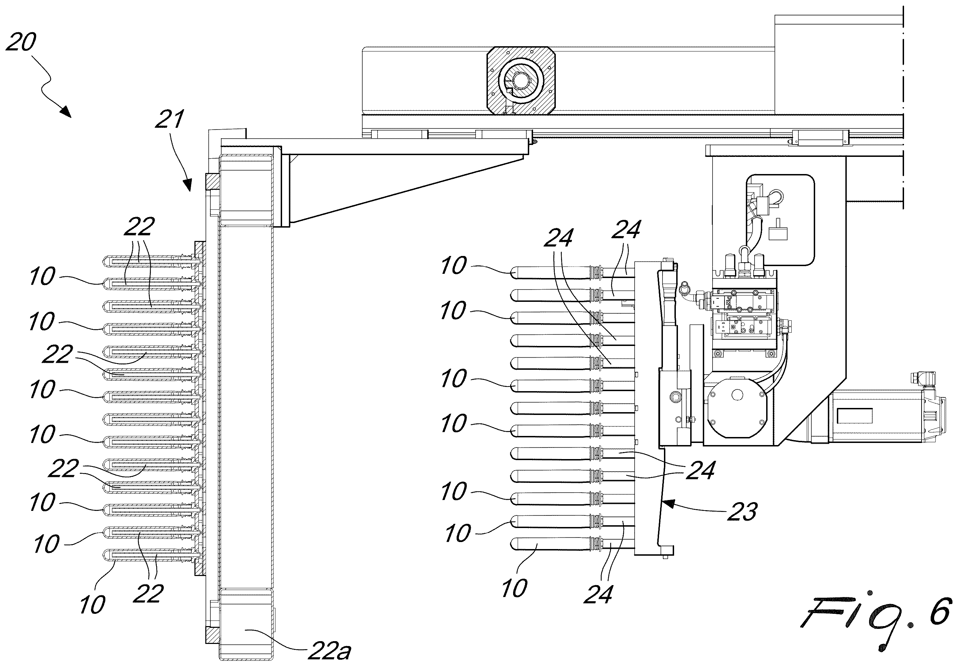

With reference to the embodiment shown in Figures 1 to 6, the cooling plate 21 can define a plurality of crossing openings 26 designed to be crossed by a respective grip body 24.

However, it has been found that it is particularly advantageous that the crossing openings are formed by a plurality of slits 26a with a substantially vertical extension.

Conveniently, the slits 26a are open downward.

In practice, in this constructive variation, if a preform 10, for any reason, is not picked up in an optimum manner by the grip bodies 24, it can fall freely without risking getting stuck in the crossing opening 26.

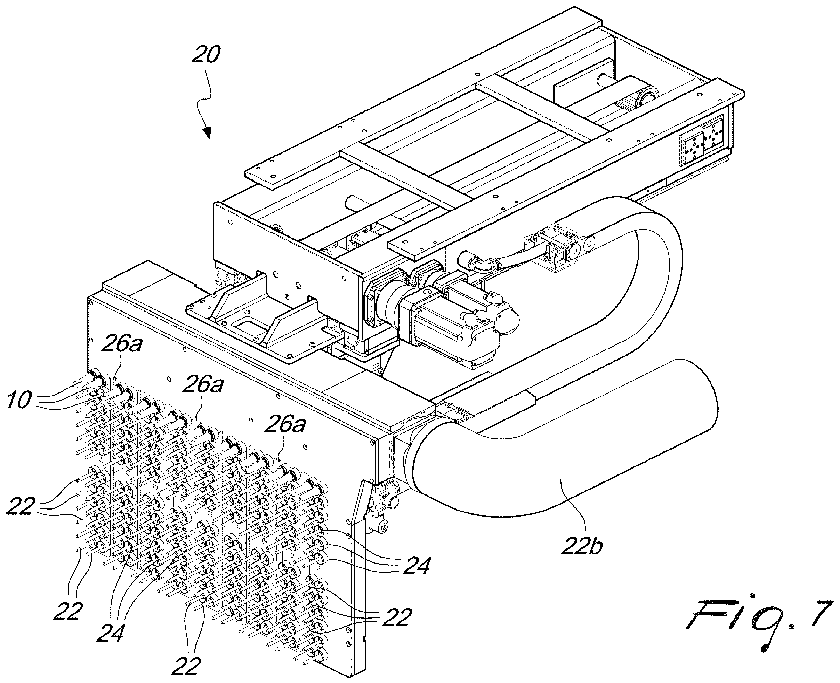

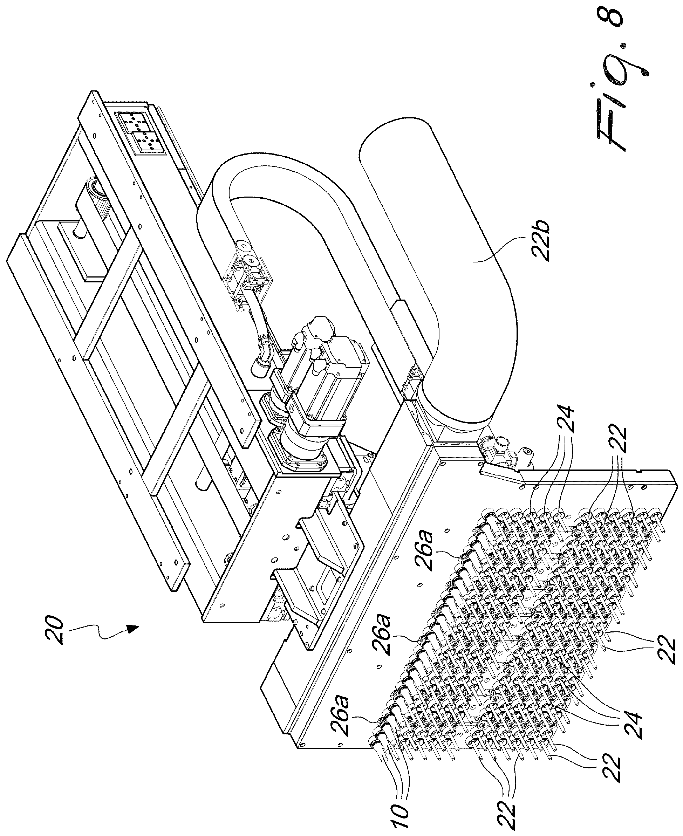

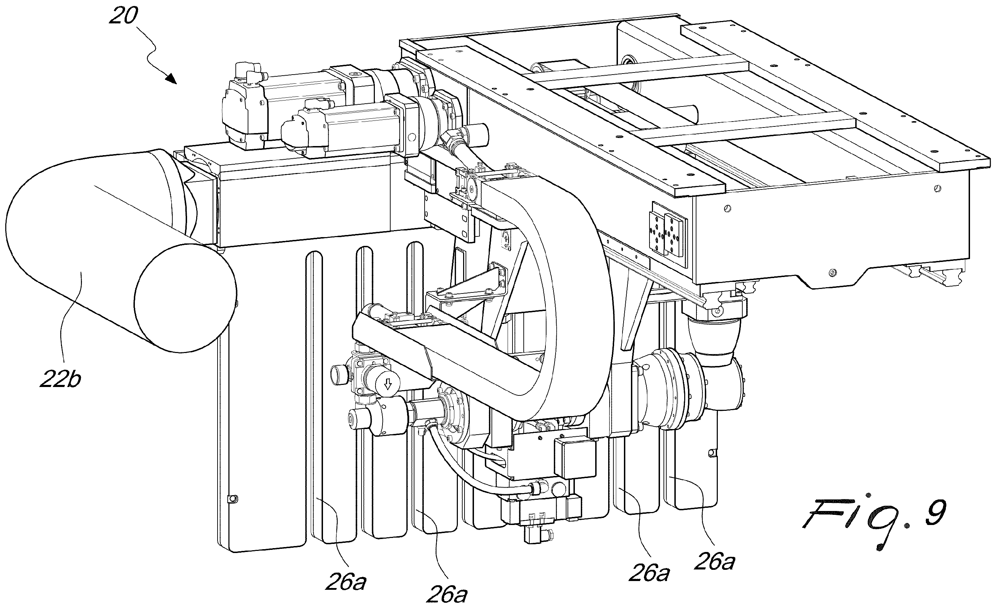

With reference to the constructive variation shown in Figures 7 to 9, it has been found that it is possible to use a single device for producing air, and in particular a single flexible tubular element 22b connected to the cooling plate 21.

In fact, this embodiment allows, with the help of deflectors and/or of particular geometries of the channels, to ensure a substantially even flow on all the cooling channels 22.

The evident advantage is that it is possible to use a single blower, if provided, and a single tubular element, thus providing space in the lower part of the grip assembly 2 with consequent facilitation in the access and management of the rotation of the unloading plate 23, and allowing to have regions in which the preforms that are not gripped correctly can stop.

Conveniently, the cooling plate 21 is arranged substantially parallel to the plane of arrangement of the receptacles 3.

In particular, the cooling plate 21 can move between the spaced position and the closer position along a movement direction 100 that is substantially perpendicular to its plane of arrangement.

Advantageously, the unloading plate 23 can move between a disengagement position, in which the grip bodies 24 are arranged on the opposite side of the grip assembly 2 with respect to the cooling plate 21, and an engagement position, in which the grip bodies 21 are at least partially arranged on the same side of the grip assembly 2 with respect to the cooling plate 21 in order to allow its engagement with a respective preform 10.

Conveniently, the unloading plate 23 can move, in its disengagement position, between a condition for retaining the respective preforms 10 and a position for unloading the respective preforms 10.

Advantageously, the unloading plate 23 in the engagement position is arranged so that its plane of arrangement is arranged substantially vertically, while it is convenient to provide that the plane of arrangement, in the unloading position, is arranged substantially horizontally so that the preforms 10 are directed downward.

Preferably, the grip bodies 24 comprise a retention device for a respective preform 10.

The retention device can be actuated on command in order to pass between an active condition, in which it allows the locking of the respective preform 10, and an inactive condition, in which it allows coupling and uncoupling with the respective preform 10.

The retention device comprises an engagement head which is associated with actuation means of the mechanical type or pneumatic type.

The operation of the device 1 is as follows.

At each molding cycle, the grip assembly 2 is moved in order to allow the transfer of the preforms 10 that have just been molded in respective receptacles formed at the grip assembly 2 and to arrange it facing the cooling and extraction assembly 20.

At this point, the cooling plate 21 is moved on command from the position that is spaced from the grip assembly 2 toward the position that is closer to the grip assembly 2.

In the closer position, the cooling channels 22 are arranged at the cavities of the respective preforms 10 to be cooled and the air sent toward the cooling channels is then directed inside said preforms 10 in order to determine their cooling by convection of the injected air.

While the cooling plate 21 is moved to the closer position, the grip bodies 24 supported by the unloading plate 23 are moved to cross the cooling plate 21 in order to engage respective preforms 10 (not engaged by the cooling channels 22) which are to be extracted from their respective receptacles, having already previously performed one or more cycles for injecting air by means of the cooling channels 22.

In the meantime, the cooling channels 22 continue to inject air into the respective preforms 10 while the grip bodies 24 are moved to the retention condition so as to lock thereon the respective preform 10.

At this point, the unloading plate 23 and, with a conveniently synchronized movement, the cooling plate 21 are moved away from the grip assembly 2 so as to disengage the cooling channels 22 from the respective preform 10, and to move the preforms 10 retained by the grip bodies 24 so that they cross the cooling plate 21 in order to reach its disengagement position, and therefore, from the condition for retention of the respective preforms 10, to the position for unloading the respective preforms 10, by means of a downward rotation about a substantially horizontal pivoting axis.

In the meantime, the preform molding device has completed a new molding cycle and the still-warm preforms are transferred at the receptacles of the grip assembly 2 that have just been freed.

The grip assembly 2 then moves to a position in which the receptacles are offset with respect to the previous position, so that the grip bodies 24 can engage the preforms 10 that have already finished the cooling cycles.

The proposed solution, by making the cooling step substantially independent of the unloading step, allows to optimize the operations for cooling (making them dependent only on the molding steps) and unloading (with movement dynamics that can be slower indeed because of the longer time made available by the separation of the cycles).

Furthermore, the device according to the invention allows to adjust the position of the cooling channels 22 without worrying about the movement of the grip bodies.

Further aspects of the invention are set out in the following numbered paragraphs, which form part of the description of this application and do not constitute claims thereof:
1. A device (1) for the cooling and extraction of preforms (10) for the manufacture of plastic containers, comprising at least one grip assembly (2) which forms a plurality of receptacles for respective preforms (10) and means for transferring the preforms that are still warm from an injection molding device to said grip assembly (2), characterized in that it comprises a cooling and extraction assembly (20) which comprises a cooling plate (21) which is arranged so as to face said grip assembly (2) and can move on command between a position that is closer to said grip assembly (2) and a position that is spaced from said grip assembly (2), said cooling plate (21) supporting a plurality of cooling channels (22) which are designed, with said cooling plate (21) in said closer position, to lead into a respective preform (10) accommodated in a respective receptacle in order to convey a jet of air inside said preform (10) so as to increase its cooling rate, said cooling and extraction assembly (20) comprising an unloading plate (23) which is arranged on the opposite side of said grip assembly (2) with respect to said cooling plate (21), and supports a plurality of grip bodies (24) which can be moved on command in order to pass through said cooling plate (21) so as to engage selectively, with said cooling plate (21) in the closer position, with a respective preform (10) in order to allow its extraction from the respective receptacle (3).
2. The device according to paragraph 1, characterized in that said grip assembly (2) comprises a grip plate which supports said plurality of receptacles for respective preforms (10).
3. The device according to one or more of the preceding paragraphs 1-2, characterized in that said receptacles are arranged like a matrix on a plane of arrangement.
4. The device (1) according to one or more of the preceding paragraphs 1-3, characterized in that said cooling plate (21) is provided with crossing openings (26) for said grip bodies (24) during the step of engagement with the respective preforms (10) and in the step of extraction of said preforms (10).
5. The device (1) according to one or more of the preceding paragraphs 1-4, characterized in that said cooling plate (21) is arranged substantially parallel to the plane of arrangement of said receptacles, said cooling plate (21) being movable between said spaced position and said closer position along a movement direction that is substantially perpendicular to its plane of arrangement.
6. The device (1) according to one or more of the preceding paragraphs 1-5, characterized in that said unloading plate (23) can move between a disengagement position, in which said grip bodies (24) are arranged on the opposite side of said grip assembly (2) with respect to said cooling plate (21), and an engagement position, in which said grip bodies (21) are at least partially arranged on the same side of said grip assembly (2) with respect to said cooling plate (21) in order to allow its engagement with a respective preform (10).
7. The device (1) according to one or more of the preceding paragraphs 1-6, characterized in that said cooling plate (21) has crossing openings (26) comprising a plurality of slits (26a) with a substantially vertical extension.
8. The device (1) according to one or more of the preceding paragraphs 1-7, characterized in that said unloading plate (23) can move, in said disengagement position, between a condition for retaining the respective preforms (10) and a position for unloading the respective preforms (10).
9. The device (1) according to one or more of the preceding paragraphs 1-8, characterized in that said grip bodies (24) comprise a retention device for a respective preform (10) which can be actuated on command in order to pass between an active condition, in which it allows the locking of the respective preform (10), and an inactive condition, in which it allows coupling and uncoupling with the respective preform (10).
10. The device (1) according to one or more of the preceding paragraphs 1-9, characterized in that said retention device comprises an engagement head which is associated with actuation means of the mechanical or pneumatic type.

The invention thus conceived is susceptible of numerous modifications and variations, all of which are within the scope of the appended claims.

In practice, the materials used, so long as they are compatible with the specific use, as well as the shapes and dimensions, may be any according to the requirements.

All the details may furthermore be replaced with other technically equivalent elements.

The disclosures in Italian Patent Application No. 102020000002722 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for the cooling and extraction of preforms (10) for the manufacture of plastic containers, comprising at least one grip assembly (2) which forms a plurality of receptacles for respective preforms (10) and means for transferring the preforms that are still warm from an injection molding device to said grip assembly (2), **characterized in that** it comprises a cooling and extraction assembly (20) which comprises a cooling plate (21), which is arranged so as to face said grip assembly (2) and can move on command between a position that is closer to said grip assembly (2) and a position that is spaced from said grip assembly (2), said cooling plate (21) supporting a plurality of cooling channels (22) which are designed, with said cooling plate (21) in said closer position, to lead into a respective preform (10) accommodated in a respective receptacle in order to convey a jet of air inside said preform (10) so as to increase its cooling rate, said cooling and extraction assembly (20) comprising an unloading plate (23) which is arranged on the opposite side of said grip assembly (2) with respect to said cooling plate (21), and supports a plurality of grip bodies (24), wherein said grip bodies (24) can be moved on command in order to pass through said cooling plate (21) so as to engage selectively, with said cooling plate (21) in the closer position, with a respective preform (10) in order to allow its extraction from the respective receptacle (3), wherein said cooling plate (21) is provided with crossing openings (26) for said grip bodies (24) during the step of engagement with the respective preforms (10) and in the step of extraction of said preforms (10), said crossing openings (26) comprising a plurality of slits (26a) with a substantially vertical extension,
wherein said unloading plate (23) can move between a disengagement position, in which said grip bodies (24) are arranged on the opposite side of said grip assembly (2) with respect to said cooling plate (21), and an engagement position, in which said grip bodies (21) are at least partially arranged on the same side of said grip assembly (2) with respect to said cooling plate (21) in order to allow the engagement of said grip bodies with a respective preform (10).

2. The device according to claim 1, **characterized in that** said grip assembly (2) comprises a grip plate which supports said plurality of receptacles for respective preforms (10).

3. The device according to one or more of the preceding claims, **characterized in that** said receptacles are arranged like a matrix on a plane of arrangement.

4. The device (1) according to claim 2, **characterized in that** said grip plate (4) is movable along at least one positioning direction that is substantially perpendicular to the axis of the preforms so as to arrange the preforms at the cooling channels (22) or at the grip bodies (24).

5. The device (1) according to one or more of the preceding claims, **characterized in that** said cooling plate (21) is arranged substantially parallel to the plane of arrangement of said receptacles, said cooling plate (21) being movable between said spaced position and said closer position along a movement direction that is substantially perpendicular to its plane of arrangement.

6. The device (1) according to one or more of the preceding claims, **characterized in that** said slits (26a) are open downward.

7. The device (1) according to one or more of the preceding claims, **characterized in that** said unloading plate (23) can move, in said disengagement position, between a condition for retaining the respective preforms (10) and a position for unloading the respective preforms (10).

8. The device (1) according to one or more of the preceding claims, **characterized in that** said grip bodies (24) comprise a retention device for a respective preform (10) which can be actuated on command in order to pass between an active condition, in which it allows the locking of the respective preform (10), and an inactive condition, in which it allows coupling and uncoupling with the respective preform (10).

9. The device (1) according to one or more of the preceding claims, **characterized in that** said retention device comprises an engagement head which is associated with actuation means of the mechanical or pneumatic type.

10. The device (1) according to one or more of the preceding claims, wherein said grip assembly (2) can move from a first position where the cooling channels (22) can lead into respective preforms (10) accommodated in respective receptacles (3) to a second position which is offset with respect to the first position and in which the grip bodies (24) can engage such preforms (10) that have already finished the cooling cycles.

11. The device (1) according to one or more of the preceding claims, wherein the unloading plate (23) and the cooling plate (21) can move away from the grip assembly (2) so as to disengage the cooling channels (22) from the respective preforms (10) and to move the preforms retained by the grip bodies (24) so that they cross the cooling plate (21) in order to reach the disengagement position.
